# EUROPEAN PATENT APPLICATION

(11) **EP 4 525 399 A1**
(43) Date of publication of application: **19.03.2025**
(21) Application number: 23834962.5
(22) Date of filing: 10.07.2023
(51) Int. Cl.: H04L 47/125

(54) **BANDWIDTH ADJUSTMENT METHOD AND SYSTEM**

(30) Priority: 08.07.2022 CN 202210801375
(71) Applicant: xFusion Digital Technologies Co., Ltd., Zhengzhou, Henan 450000 (CN)
(72) Inventor: WANG, Yunfu, Zhengzhou, Henan 450000 (CN); LIANG, Yonggui, Zhengzhou, Henan 450000 (CN)
(74) Representative: MERH-IP Matias Erny Reichl Hoffmann Patentanwälte PartG mbB
(86) International application number: PCT/CN2023/106654
(87) International publication number: WO 2024/008197

(57) **Abstract**

Embodiments of this application disclose a bandwidth adjustment method and system. The method is applied to a compute express link CXL system. The CXL system includes at least one CXL device and a board management controller BMC, the at least one CXL device includes a first CXL device, and the first CXL device includes at least two logical devices. The BMC obtains an average load state of each logical device in the first CXL device; determines target logical devices in the first CXL device and an adjustment policy based on the average load state; and adjusts bandwidths of the target logical devices according to the adjustment policy. According to the embodiments of this application, bandwidth utilization can be increased.

## Description

This application claims priority to Chinese Patent Application No. 202210801375.2, filed with the China National Intellectual Property Administration on July 8, 2022 and entitled "BANDWIDTH ADJUSTMENT METHOD AND SYSTEM", which is incorporated herein by reference in its entirety.

### TECHNICAL FIELD

This application relates to the field of computer technologies, and in particular, to a bandwidth adjustment method and system.

### BACKGROUND

As an open industry standard, compute express link (Compute Express Link, CXL) can provide high-bandwidth and low-latency connections among dedicated computing, memory, I/O, and storage elements in a data center. There are two modes for performing memory expansion by using CXL connection memory resources: one mode is local direct expansion of a CXL memory, and the other mode is pooling of CXL memory resources. In the memory resource pooling mode, a host (Host) is connected to pooled memory resources by a switch (CXL Switch), and the memory resources are reallocated and deployed based on different workloads. However, because only a relationship between a service and a bandwidth on the Host is considered, bandwidth utilization of a multiple logical device (Multiple Logical Device, MLD) is low.

### SUMMARY

Embodiments of this application provide a bandwidth adjustment method and system, to increase bandwidth utilization of a CXL device by adjusting a bandwidth of an LD in the CXL device.

According to a first aspect, an embodiment of this application provides a bandwidth adjustment method. The method is applied to a compute express link CXL system. The CXL system includes at least one CXL device and a board management controller BMC, the at least one CXL device includes a first CXL device, and the first CXL device includes at least two logical devices. The method includes: the BMC obtains an average load state of each logical device in the first CXL device; determines target logical devices in the first CXL device and an adjustment policy based on the average load state; and adjusts bandwidths of the target logical devices according to the adjustment policy.

The BMC adjusts a bandwidth of a logical device in the first CXL device based on the average load state of each logical device in the first CXL device. In this way, even if average load states of a plurality of logical devices in a same CXL device are different, bandwidth utilization of the CXL device can also be increased by adjusting a bandwidth of a logical device in the CXL device.

In a possible design, the first CXL device obtains the average load state of each logical device in the first CXL device; and sends the average load state to the BMC. The first CXL device sends the average load state to the BMC, and the BMC collects statistics on the average load state of each logical device in the first CXL device, to adjust a bandwidth of each logical device in the first CXL device based on the average load state, thereby increasing bandwidth utilization of the CXL device.

In another possible design, the first CXL device obtains a quantity of occurrence times of each of load states of each logical device in the first CXL device in a first time period, and obtains a total quantity of occurrence times of the load states in the first time period; and determines the average load state of each logical device in the first CXL device based on the quantity of occurrence times of each of load states of each logical device in the first CXL device and the total quantity. In this way, statistics collection is performed on a proportion of the quantity of occurrence times of each of load states in the first time period, for example, on a ratio of the quantity of occurrence times of each of load states to the total quantity, to determine the average load state of each LD in the same CXL device, and ensure accuracy of the determined average load state.

In another possible design, the first CXL device calculates a ratio corresponding to a first load state by dividing a quantity of occurrence times of the first load state of a first logical device in the first CXL device by the total quantity, where the first load state is any one of a light load state, an optimal load state, a moderate overload state, and a severe overload state; compares the ratio corresponding to the first load state with a first threshold corresponding to the first load state; and if the ratio corresponding to the first load state is greater than or equal to the first threshold corresponding to the first load state, determines that an average load state of the first logical device is the first load state. In this way, statistics collection is performed on the proportion of the quantity of occurrence times of each of load states in the first time period, and the proportion is compared with a corresponding threshold, to determine the average load state of each LD in the same CXL device, and ensure accuracy of the determined average load state.

In another possible design, the BMC sends an access request to each CXL device in the at least one CXL device, where the access request is used to indicate to obtain an average load state of each logical device in each CXL device. The access request is sent to each CXL device, to perform statistics collection on the average load state of each logical device in each CXL device, so that it is ensured that a bandwidth of each logical device in each CXL device can be properly allocated.

In another possible design, the average load state includes an average light load, an average optimal load, an average moderate overload, and an average severe overload, and the first CXL device includes a first logical device and a second logical device; and when the average load state of the first logical device is different from the average load state of the second logical device, the BMC determines that the target logical devices are the first logical device and the second logical device. It is determined whether the average load states of the logical devices in the same CXL device are the same, to determine the target logical devices whose bandwidths need to be adjusted, thereby avoiding adjusting bandwidths of target logical devices with a same average load state on a premise of a specific bandwidth, and improving bandwidth adjustment efficiency.

In another possible design, the BMC determines, based on a mapping relationship between each logical device in the first CXL device and a host, whether a plurality of logical devices in the first CXL device are accessed by a plurality of hosts; and if the plurality of logical devices in the first CXL device are accessed by the plurality of hosts, the BMC determines, based on the average load state of each logical device in the first CXL device, the target logical devices whose bandwidths need to be adjusted in the first CXL device. It is determined whether the plurality of logical devices in the same CXL device are accessed by the plurality of hosts, to determine whether to adjust bandwidths of the plurality of logical devices in the CXL device, thereby avoiding adjusting a bandwidth of a CXL device that is not accessed by the plurality of hosts, and improving bandwidth adjustment efficiency.

In another possible design, when severity of the average load state of the first logical device is greater than that of the average load state of the second logical device, the BMC adjusts a bandwidth of the first logical device upward, and the BMC adjusts a bandwidth of the second logical device downward; or when severity of the average load state of the first logical device is less than that of the average load state of the second logical device, the BMC adjusts a bandwidth of the first logical device downward, and the BMC adjusts a bandwidth of the second logical device upward. In this way, a redundant bandwidth of a logical device with low average load state severity is allocated to a logical device with high average load state severity, to increase bandwidth utilization of an MLD.

In another possible design, the BMC configures a mapping relationship between a logical device in each CXL device in the at least one CXL device and a host, and configures a bandwidth of each logical device in each CXL device. The mapping relationship and the bandwidth of each logical device are preconfigured to ensure that each logical device can normally operate.

In another possible design, the BMC adjusts the bandwidths of the target logical devices based on a preset adjustment amplitude. In this way, bandwidth utilization is increased by adjusting the bandwidths of the target logical devices.

In another possible design, the bandwidth includes an allocated bandwidth and a limit bandwidth. The BMC subtracts the preconfigured allocated bandwidth from the preconfigured limit bandwidth to calculate a maximum adjustment amplitude; and adjusts the bandwidths of the target logical devices based on the maximum adjustment amplitude. In this way, bandwidth utilization is increased by adjusting the bandwidths of the target logical devices.

In another possible design, the BMC determines adjustment amplitudes of the target logical devices based on average load states of the target logical devices; and adjusts the bandwidths of the target logical devices based on the adjustment amplitudes. In this way, bandwidth utilization is increased by adjusting the bandwidths of the target logical devices.

According to a second aspect, an embodiment of this application provides a compute express link CXL system. The CXL system includes at least one CXL device and a board management controller BMC, the at least one CXL device includes a first CXL device, and the first CXL device includes at least two logical devices.

The BMC is configured to: obtain an average load state of each logical device in the first CXL device; determine target logical devices in the first CXL device and an adjustment policy based on the average load state; and adjust bandwidths of the target logical devices according to the adjustment policy.

In another possible design, the first CXL device is configured to: obtain the average load state of each logical device in the first CXL device; and send the average load state to the BMC.

In another possible design, the first CXL device is further configured to: obtain a quantity of occurrence times of each of load states of each logical device in the first CXL device in a first time period, and obtain a total quantity of occurrence times of the load states in the first time period; and determine the average load state of each logical device in the first CXL device based on the quantity of occurrence times of each of load states of each logical device in the first CXL device and the total quantity.

In another possible design, the BMC is further configured to send an access request to each CXL device in the at least one CXL device, where the access request is used to indicate to obtain the average load state of each logical device in each CXL device.

In another possible design, the average load state includes an average light load, an average optimal load, an average moderate overload, and an average severe overload, and the first CXL device includes a first logical device and a second logical device.

The BMC is further configured to: when the average load state of the first logical device is different from the average load state of the second logical device, determine that the target logical devices are the first logical device and the second logical device.

In another possible design, the BMC is further configured to: when severity of the average load state of the first logical device is greater than that of the average load state of the second logical device, adjust a bandwidth of the first logical device upward, and adjust a bandwidth of the second logical device downward; or
the BMC is further configured to: when severity of the average load state of the first logical device is less than that of the average load state of the second logical device, adjust a bandwidth of the first logical device downward, and adjust a bandwidth of the second logical device upward.

In another possible design, the BMC is further configured to configure a mapping relationship between a logical device in each CXL device in the at least one CXL device and a host, and configure a bandwidth of each logical device in each CXL device.

In another possible design, the BMC is further configured to adjust the bandwidths of the target logical devices based on a preset adjustment amplitude.

In another possible design, the BMC is further configured to: subtract a preconfigured allocated bandwidth from a preconfigured limit bandwidth to calculate a maximum adjustment amplitude; and adjust the bandwidths of the target logical devices based on the maximum adjustment amplitude.

In another possible design, the BMC is further configured to: determine adjustment amplitudes of the target logical devices based on average load states of the target logical devices; and adjust the bandwidths of the target logical devices based on the adjustment amplitudes.

For operations performed by the CXL system and beneficial effects, refer to the method and the beneficial effects described in the first aspect. Details are not described again.

According to a third aspect, an embodiment of this application provides a bandwidth adjustment apparatus, including:
a management module, configured to: obtain an average load state of each logical device in the first CXL device; determine target logical devices in the first CXL device and an adjustment policy based on the average load state; and adjust bandwidths of the target logical devices according to the adjustment policy.

In a possible design, the apparatus further includes:
a calculation module, configured to: obtain the average load state of each logical device in the first CXL device; and send the average load state to the BMC.

In another possible design, the calculation module is further configured to: obtain a quantity of occurrence times of each of load states of each logical device in the first CXL device in a first time period, and obtain a total quantity of occurrence times of the load states in the first time period; and determine the average load state of each logical device in the first CXL device based on the quantity of occurrence times of each of load states of each logical device in the first CXL device and the total quantity.

In another possible design, the management module is further configured to send an access request to each CXL device in the at least one CXL device, where the access request is used to indicate to obtain the average load state of each logical device in each CXL device.

In another possible design, the management module is further configured to: when an average load state of the first logical device is different from an average load state of the second logical device, determine that the target logical devices are the first logical device and the second logical device.

In another possible design, the management module is further configured to: when severity of the average load state of the first logical device is greater than that of the average load state of the second logical device, adjust a bandwidth of the first logical device upward, and adjust a bandwidth of the second logical device downward; or when severity of the average load state of the first logical device is less than that of the average load state of the second logical device, adjust a bandwidth of the first logical device downward, and adjust a bandwidth of the second logical device upward.

In another possible design, the management module is further configured to configure a mapping relationship between a logical device in each CXL device in the at least one CXL device and a host, and configure a bandwidth of each logical device in each CXL device.

In another possible design, the management module is further configured to adjust the bandwidths of the target logical devices based on a preset adjustment amplitude.

In another possible design, the management module is further configured to: subtract a preconfigured allocated bandwidth from a preconfigured limit bandwidth to calculate a maximum adjustment amplitude; and adjust the bandwidths of the target logical devices based on the maximum adjustment amplitude.

In another possible design, the management module is further configured to: determine adjustment amplitudes of the target logical devices based on average load states of the target logical devices; and adjust the bandwidths of the target logical devices based on the adjustment amplitudes.

For operations performed by the bandwidth adjustment apparatus and beneficial effects, refer to the method and the beneficial effects described in the first aspect. Details are not described again.

According to a fourth aspect, an embodiment of this application provides a switching device. The switching device includes a processor and a memory, where the memory is configured to store computer-executable instructions; and the processor is configured to execute the computer-executable instructions stored in the memory, so that the switching device performs the method according to any item in the first aspect.

According to a fifth aspect, an embodiment of this application provides a computer-readable storage medium. The computer-readable storage medium is configured to store a computer program, and when the computer program is executed, the method according to any item in the first aspect is implemented.

According to a sixth aspect, an embodiment of this application provides a computer program product including a computer program. When the computer program is executed, the method according to any item in the first aspect is implemented.

### BRIEF DESCRIPTION OF DRAWINGS

To describe the technical solutions in the embodiments or the background of this application more clearly, the following describes the accompanying drawings required in the embodiments or the background of this application.
FIG. 1 is a schematic diagram of a CXL system according to an embodiment of this application;
FIG. 2 is a schematic flowchart of a bandwidth adjustment method according to an embodiment of this application;
FIG. 3 is a schematic flowchart of another bandwidth adjustment method according to an embodiment of this application;
FIG. 4 is a schematic diagram of a structure of a bandwidth adjustment apparatus according to an embodiment of this application; and
FIG. 5 is a schematic diagram of a structure of a switching device according to an embodiment of this application.

### DESCRIPTION OF EMBODIMENTS

The following describes embodiments of this application with reference to the accompanying drawings in embodiments of this application.

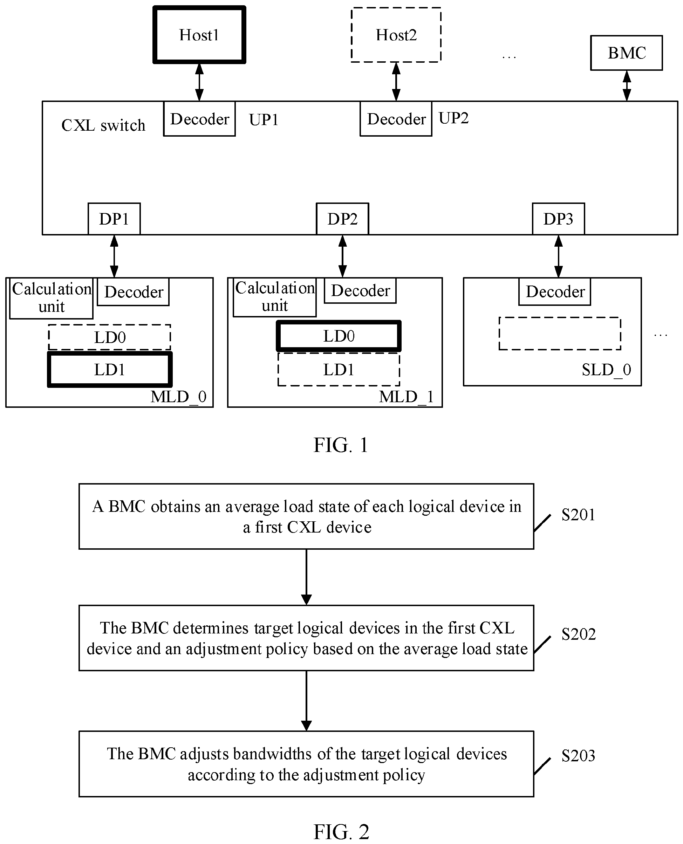

FIG. 1 is a schematic diagram of a CXL system according to an embodiment of this application. The CXL system may be a server, and the CXL system may include components such as a host (Host), a CXL switch (CXL Switch), at least one CXL device (CXL Device), and a board management controller (Board Management Controller, BMC). The CXL device may include a cache and an accessible memory, and the CXL device may receive an access request from the Host or return a response to the Host. The CXL device may further include a decoder (Decoder), configured to decode the received access request. The CXL device may include multiple logical devices (Multiple Logical Device, MLD), and each MLD further includes a plurality of LDs. The CXL device may alternatively include a single logical device (Single Logical Device, SLD). The LD or SLD is a virtual device that has storage and statistics collection functions and that is created on the CXL device. The CXL switch includes an upstream port (UpStream Port, UP) and a downstream port (DownStream Port, DP), which are separately connected to the Host and the MLD and/or SLD. The Decoder may alternatively be included at an UP position of the CXL switch. The CXL switch may implement a mapping relationship between the SLD or LD and the Host. The BMC may establish a mapping relationship between the LD and the Host, and may also configure a bandwidth of the LD or SLD.

It should be noted that the BMC may be disposed on the CXL switch, or may be a separate device.

In this embodiment of this application, a calculation unit is added to the CXL Device. The calculation unit may calculate an average load state (average DevLoad, AvrDevLoad) of each logical device, and then report the average load state of each logical device to the BMC. The BMC adjusts a bandwidth of each logical device based on the average load state. The following performs specific description by using embodiments. Details are not described herein again.

CXL memory resources may be expanded in the following two modes: a first mode is local direct expansion of the CXL memory resources. The second mode is pooling of the CXL memory resources. In the memory resource pooling mode, the host is connected to pooled memory resources by using the CXL Switch, and the memory resources are reallocated and deployed based on different workloads. After a workload is completed, memory resources may be released, and the released memory resources may be applied to a next work task. Pooling of the memory resources can support matching of a plurality of hosts with a plurality of memory resources.

In memory resource pooling application, a Host accesses an LD corresponding to the Host through the upstream port and the downstream port of the CXL Switch. For example, the Host may send an access request to the CXL Switch. The CXL Switch receives the access request of the Host through the upstream port, then determines, based on the mapping relationship between the SLD or LD and the Host, the LD corresponding to the Host, and forwards the access request to the LD corresponding to the Host through the downstream port. The LD returns a response to the Host based on the access request after receiving the access request. LDs accessed by Hosts may belong to different MLDs, or may belong to a same MLD.

Because an access traffic requirement of the Host on the LD constantly changes, the LD has different load states at different moments. The CXL standard performance evaluation corporation (Standard Performance Evaluation Corporation, SPEC) defines a quality of service flow (Quality of Service, QoS) mechanism of the CXL device, and the QoS mechanism defines a load state (Devload) of the CXL device. The Host may obtain a load state of each CXL device, and control an access request for the CXL device based on the load state.

In the QoS mechanism defined by the CXL Spec, there are four load states for bandwidth access loads of the CXL device. As shown in Table 1, the four load states include a light load (Light load) state, an optimal load (Optimal load) state, a moderate overload (Moderate overload) state, and a severe overload (Severe overload) state. The load state may represent a state of a queue delay in the CXL device, or may represent resource utilization in the CXL device.

**Table 1**

| Load state | State of a queue delay in a device | Resource utilization |
|---|---|---|
| Light load | Lowest | More requests can be processed at any time |
| Optimal load | Moderate | Optimal utilization |
| Moderate overload | Severe | Throughput is limited and/or efficiency is reduced |
| Severe overload | Extremely severe | The severe overload state occurs and/or efficiency is reduced |

The QoS mechanism defined by the CXL spec is as follows:
(1) The BMC configures a mapping relationship between the Host and the CXL Device. As shown in FIG. 1, LD1 of MLD_0, LD0 of MLD_1, and SLD_0 are mapped to Host1 (bolded parts), and LD0 of MLD_0 and LD1 of MLD_1 are mapped to Host2 (dashed parts). As shown in Table 2, mapping relationships between both of LD1 of MLD_0 and LD0 of MLD_1 and Host1 are configured, and mapping relationships between both of LD0 of MLD_0 and LD1 of MLD_1 and Host2 are configured. As shown in Table 3, a mapping relationship between SLD_0 and Host1 is configured.

**Table 2**

| Host number | MLD number | LD number |
|---|---|---|
| Host1 | 0 | 1 |
| | 1 | 0 |
| | ... | ... |
| Host2 | 0 | 0 |
| | 1 | 1 |
| | ... | ... |

**Table 3**

| Host number | SLD number |
|---|---|
| Host1 | 0 |

(2) The BMC configures an allocated bandwidth and a limit bandwidth of each LD and/or SLD based on traffic required for a service of each LD and/or SLD.

In the QoS mechanism defined by the CXL, a bandwidth (BandWidth, BW) of the LD and/or SLD includes an allocated bandwidth (Allocated BW) and a limit bandwidth (Limit BW). The Allocate BW may represent a guaranteed bandwidth that can be allocated to or used by the LD and/or SLD, and the Limit BW may represent a maximum bandwidth that can be allocated to or used by the LD and/or SLD.

If traffic required for a service of a specific LD and/or SLD is greater than traffic required for a service of another LD and/or SLD, an allocated bandwidth and a limit bandwidth of the LD and/or SLD may be configured to be greater than an allocated bandwidth and a limit bandwidth of the another LD and/or SLD. If traffic required for a service of a specific LD and/or SLD is less than traffic required for a service of another LD and/or SLD, an allocated bandwidth and a limit bandwidth of the LD and/or SLD may be configured to be less than an allocated bandwidth and a limit bandwidth of the another LD and/or SLD.

(3) Each LD calculates current access traffic of the LD and updates a load state of the LD based on the current access traffic of the LD.

Specifically, the LD may collect statistics on a quantity of received access requests, determine, based on the quantity of access requests, the current access traffic of the LD accessed by the Host, and update the load state of the LD based on the current access traffic, the Allocate BW, and the Limit BW. For example, if a bandwidth of the current access traffic of the LD exceeds the Limit BW, a current load state is adjusted upward. If a bandwidth of the current access traffic of the LD is less than the Allocate BW, a current load state is adjusted downward.

The LD may send an updated load state to the Host after completing updating the load state. For example, the updated load state may be sent to the Host by using a no data response (No Data Response, NDR) message, so that the Host adjusts the quantity of access requests.

As shown in Table 4, if a load state of a specific LD is Light load or Optimal load, and current access traffic exceeds the limit BW, the LD adjusts the load state of the LD from Light load or Optimal load to Moderate overload. If a load state of a specific LD is Moderate overload, and current access traffic does not exceed the allocated BW and does not exceed the limit BW, the LD adjusts the load state of the LD from Moderate overload to Optimal load. If a load state of a specific LD is Moderate overload, and current access traffic exceeds the allocated BW and does not exceed the limit BW, the LD maintains the load state of the LD as Moderate overload. If a load state of a specific LD is Moderate overload, and current access traffic exceeds the limit BW, the LD adjusts the load state of the LD from Moderate overload to Severe overload. Other cases are shown in Table 4. Details are not described one by one.

**Table 4**

| Load state | Whether the limit bandwidth is exceeded | Whether the allocated bandwidth is exceeded | Updated load state |
|---|---|---|---|
| Light load or optimal load | No | - | Light load or optimal load |
| | Yes | - | Moderate overload |
| Moderate overload | No | No | Optimal load |
| | No | Yes | Moderate overload |
| | Yes | - | Severe overload |
| Severe overload | - | No | Moderate overload |
| | - | Yes | Severe overload |

(4) The Host adjusts the access request for the LD.

The CXL specs defines that the Host may obtain the load state of the LD from the NDR message, and then adjust the quantity of access requests for the LD based on the load state of the LD, to control bandwidth utilization of the LD.

In conclusion, if LDs accessed by a specific Host all belong to a same MLD, the Host may adjust access requests for the LDs in a timely manner based on load states of the LDs accessed by the Host, to implement QoS control. However, in this solution, only a case of a single Host is considered, and impact between a plurality of Hosts is not considered. When LDs accessed by different Hosts belong to a same MLD, or LDs accessed by a same Host belong to different MLDs, for example, in FIG. 1, LD0 of MLD_0 is mapped to Host2, and LD1 is mapped to Host1, that is, MLD_0 is accessed by both Host1 and Host2, because one of the Hosts does not know a load state of an LD accessed by the other Host, there may be a case in which an access bandwidth of an LD accessed by one of the Hosts is idle and an access bandwidth of an LD accessed by the other Host is overloaded. Consequently, a bandwidth of an MLD cannot be fully used.

To resolve the foregoing technical problem, embodiments of this application provide the following solutions.

FIG. 2 is a schematic flowchart of a bandwidth adjustment method according to an embodiment of this application. The method mainly includes the following steps.

S201: a BMC obtains an average load state of each logical device in a first CXL device.

Specifically, the BMC may send an access request to each CXL device in at least one CXL device, where the access request is used to indicate to obtain an average load state of each logical device in each CXL device. After receiving the access request, the first CXL device obtains a quantity of occurrence times of each of load states of each logical device in the first CXL device in a first time period, and obtains a total quantity of occurrence times of the load states in the first time period; determines the average load state of each logical device in the first CXL device based on the quantity of occurrence times of each of load states of each logical device in the first CXL device and the total quantity; and sends the average load state to the BMC.

The average load state includes an average light load, an average optimal load, an average moderate overload, and an average severe overload.

S202: the BMC determines target logical devices in the first CXL device and an adjustment policy based on the average load state.

The first CXL device may include a first logical device and a second logical device. The adjustment policy may include one or more of upward adjustment, downward adjustment, or an adjustment amplitude.

Specifically, when an average load state of the first logical device is different from an average load state of the second logical device, the BMC determines that the target logical devices are the first logical device and the second logical device. When severity of the average load state of the first logical device is greater than that of the average load state of the second logical device, the BMC adjusts a bandwidth of the first logical device upward, and the BMC adjusts a bandwidth of the second logical device downward; or when severity of the average load state of the first logical device is less than that of the average load state of the second logical device, the BMC adjusts a bandwidth of the first logical device downward, and the BMC adjusts a bandwidth of the second logical device upward.

S203: the BMC adjusts bandwidths of the target logical devices according to the adjustment policy.

In an embodiment, the BMC may adjust the bandwidths of the target logical devices based on a preset adjustment amplitude.

In an embodiment, the BMC may subtract a preconfigured allocated bandwidth from a preconfigured limit bandwidth, to calculate a maximum adjustment amplitude; and adjust the bandwidths of the target logical devices based on the maximum adjustment amplitude.

In an embodiment, the BMC may determine adjustment amplitudes of the target logical devices based on average load states of the target logical devices; and adjust the bandwidths of the target logical devices based on the determined adjustment amplitudes.

In this embodiment of this application, the BMC adjusts a bandwidth of a logical device in the first CXL device based on the average load state of each logical device in the first CXL device. In this way, even if a plurality of logical devices in a same CXL device are accessed by different hosts, bandwidth utilization of the CXL device can also be increased by adjusting a bandwidth of the logical device in the CXL device.

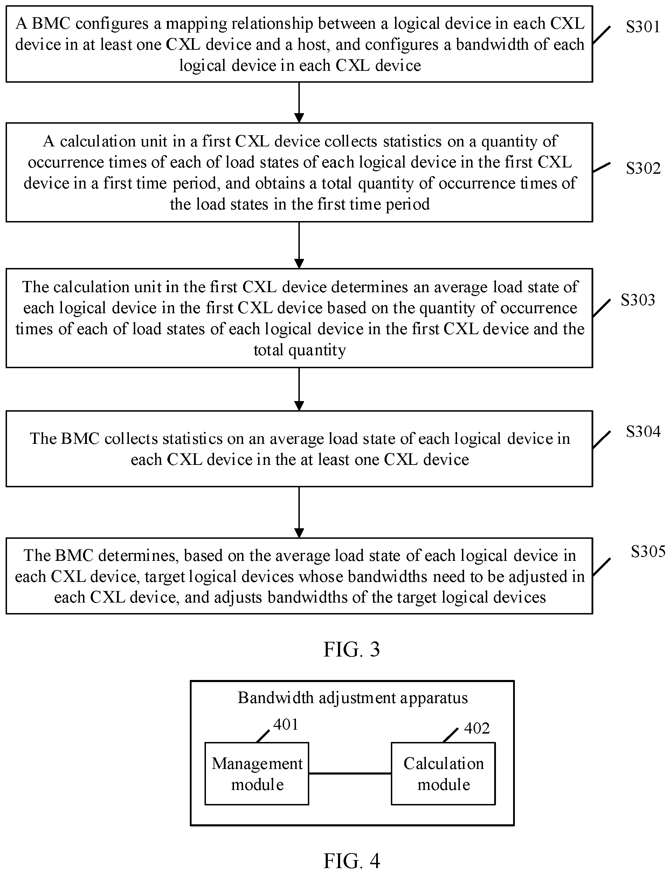

FIG. 3 is a schematic flowchart of another bandwidth adjustment method according to an embodiment of this application. The method mainly includes the following steps.

S301: a BMC configures a mapping relationship between a logical device in each CXL device in at least one CXL device and a host, and configures a bandwidth of each logical device in each CXL device. As shown in FIG. 1, LD1 of MLD_0, LD0 of MLD_1, and SLD_0 are mapped to Host1 (bolded parts), and LD0 of MLD_0 and LD1 of MLD_1 are mapped to Host2 (dashed parts). As shown in Table 5, mapping relationships between both of LD1 of MLD_0 and LD0 of MLD_1 and Host1 are configured, and mapping relationships between both of LD0 of MLD_0 and LD1 of MLD_1 and Host2 are configured.

**Table 5**

| Host number | MLD number | LD number |
|---|---|---|
| Host1 | 0 | 1 |
| | 1 | 0 |
| | ... | ... |
| Host2 | 0 | 0 |
| | 1 | 1 |
| | ... | ... |

As shown in Table 6, a mapping relationship between SLD_0 and Host1 is configured.

**Table 6**

| Host number | SLD number |
|---|---|
| Host1 | 0 |

Specifically, the BMC may configure an allocated bandwidth and a limit bandwidth of each LD and/or SLD based on traffic required for a service of each LD and/or SLD. The configured allocated bandwidth may be used as an initial allocated bandwidth, and the configured limit bandwidth may be used as an initial limit bandwidth.

For example, if traffic required for a service of a specific LD and/or SLD is greater than traffic required for a service of another LD and/or SLD, an allocated bandwidth and a limit bandwidth of the LD and/or SLD may be configured to be greater than an allocated bandwidth and a limit bandwidth of the another LD and/or SLD. If traffic required for a service of a specific LD and/or SLD is less than traffic required for a service of another LD and/or SLD, an allocated bandwidth and a limit bandwidth of the LD and/or SLD may be configured to be less than an allocated bandwidth and a limit bandwidth of the another LD and/or SLD.

Table 7 is a schematic table of bandwidth allocation of an MLD, where an allocated bandwidth of LD0 of MLD_0 is 40%, and a limit bandwidth of LD0 of MLD_0 is 60%. An allocated bandwidth of LD1 of MLD_0 is 40%, and a limit bandwidth of LD1 of MLD_0 is 60%. An allocated bandwidth of LD0 of MLD_1 is 40%, and a limit bandwidth of LD0 of MLD_1 is 60%. An allocated bandwidth of LD1 of MLD_1 is 40%, and a limit bandwidth of LD1 of MLD_1 is 60%.

**Table 7**

| MLD number | LD number | Allocated bandwidth (%) | Limit bandwidth (%) |
|---|---|---|---|
| 0 | 0 | 40 | 60 |
| | 1 | 40 | 60 |
| 1 | 0 | 40 | 60 |
| | 1 | 40 | 60 |

Further, Table 8 is a schematic table of bandwidth allocation of an SLD, where an allocated bandwidth of the SLD is 40%, and a limit bandwidth of the SLD is 60%.

**Table 8**

| SLD number | Allocated bandwidth (%) | Limit bandwidth (%) |
|---|---|---|
| 1 | 40 | 60 |

S302: a calculation unit in a first CXL device in the at least one CXL device collects statistics on a quantity of occurrence times of each of load states of each logical device in the first CXL device in a first time period, and obtains a total quantity of occurrence times of the load states in the first time period. The first CXL device may be any one of a plurality of MLD devices.

Specifically, the load states of each logical device may include Light load, Optimal load, Moderate overload, or Severe overload. The first time period may include N sampling periods. The calculation unit may determine a load state of each logical device in each sampling period, to obtain load states of each logical device in the N sampling periods. Then, the calculation unit collects statistics on the load states of each logical device in the N sampling periods to determine a quantity of occurrence times of each of load states of each logical device. The total quantity may be equal to N, and N is an integer greater than or equal to 1.

For example, MLD_0 includes LD0 and LD1, and the first time period includes five sampling periods. In a first sampling period, a load state of LD0 is Light load, and a load state of LD1 is Optimal load. In a second sampling period, a load state of LD0 is Optimal load, and a load state of LD1 is Moderate overload. In a third sampling period, a load state of LD0 is Light load, and a load state of LD1 is Optimal load. In a fourth sampling period, a load state of LD0 is Light load, and a load state of LD1 is Optimal load. In a fifth sampling period, a load state of LD0 is Light load, and a load state of LD1 is Severe overload. Based on statistics collection of the foregoing five sampling periods, the load state Light load of LD0 occurs four times, the load state Optimal load of LD0 occurs once, and no other load state occurs. The load state Optimal load of LD1 occurs three times, the load state Moderate overload of LD1 occurs once, and the load state Severe overload of LD1 occurs once.

Optionally, a quantity ReqCn of access requests received and a quantity CmpCnt of responses completed by each logical device in each sampling period may be obtained, and an occupied bandwidth of each logical device is determined based on the quantity of access requests and the quantity of responses completed. Then, the load state of each logical device is determined based on the occupied bandwidth and a preconfigured allocated bandwidth of each logical device. An information length of the access requests and the responses completed is a fixed value.

Further, a sum of the quantity ReqCnt of access requests and the quantity CmpCn of responses completed may be calculated in each sampling period to obtain the occupied bandwidth of each logical device, and then the load state of each logical device is determined based on a ratio of the occupied bandwidth to the preconfigured allocated bandwidth.

For example, in a specific sampling period, if an occupied bandwidth of LD0 of MLD_0 is 80 MB/s, and the preconfigured allocated bandwidth is 50 MB/s, a ratio of the occupied bandwidth to the preconfigured allocated bandwidth is 1.6, and it may be determined that the load state of LD0 in the sampling period is Severe overload. If an occupied bandwidth of LD0 of MLD_0 is 50 MB/s, and the preconfigured allocated bandwidth is 50 MB/s, a ratio of the occupied bandwidth to the preconfigured allocated bandwidth is 1.0, and it may be determined that the load state of LD0 in the sampling period is Optimal load.

S303: the calculation unit in the first CXL device determines an average load state of each logical device in the first CXL device based on the quantity of occurrence times of each of load states of each logical device in the first CXL device and the total quantity.

Specifically, a ratio corresponding to a first load state may be calculated by dividing a quantity of occurrence times of the first load state of a first logical device in a plurality of logical devices by the total quantity; then the ratio corresponding to the first load state is compared with a first threshold corresponding to the first load state; and if the ratio corresponding to the first load state is greater than or equal to the first threshold corresponding to the first load state, an average load state of the first logical device is determined as the first load state. The first load state is any one of a light load state, an optimal load state, a moderate overload state, and a severe overload state.

There may be five average load states: an average light load (Avr Light load) state, an average optimal load (Avr Optimal load) state, an average moderate overload (Avr Moderate overload) state, an average severe overload (Avr Severe overload) state, and a vary (Vary) state. When a ratio corresponding to any load state of the first logical device is less than a corresponding first threshold, the average load state of the first logical device is determined as Vary. It should be noted that the average light load state, the average optimal load Optimal load) state, the average moderate overload (Avr Moderate overload) state, and the average severe overload (Avr Severe overload) state are in ascending order of severity.

Table 9 is a preconfigured determining threshold table. For example, the load state of LD0 of MLD_0 is Light load, and a corresponding first threshold is 80%. When a ratio of a quantity of occurrence times of Light load of LD0 of MLD_0 to the total quantity is greater than or equal to 80%, an average load state of LD0 of MLD_0 is determined as Avr Light load. For another example, the load state of LD0 of MLD_0 is Moderate overload, and a corresponding first threshold is 70%. When a ratio of a quantity of occurrence times of Moderate overload of LD0 of MLD_0 to the total quantity is greater than or equal to 70%, an average load state of LD0 of MLD_0 is determined as Avr Moderate overload. For another example, when a ratio of a quantity of occurrence times of Light load of LD0 of MLD_0 to the total quantity is less than 80%, a ratio of a quantity of occurrence times of Optimal load of LD0 of MLD_0 to the total quantity is less than 80%, a ratio of a quantity of occurrence times of Moderate overload of LD0 of MLD_0 to the total quantity is less than 70%, and a ratio of a quantity of occurrence times of Severe overload of LD0 of MLD_0 to the total quantity is less than 70%, an average load state of LD0 of MLD_0 is determined as Vary.

**Table 9**

| MLD number | LD number | Load state | First threshold (%) |
|---|---|---|---|
| 0 | 0 | Light load | 80 |
| | | Optimal load | 80 |
| | | Moderate overload | 70 |
| | | Severe overload | 70 |
| | 1 | Light load | 80 |
| | | Optimal load | 80 |
| | | Moderate overload | 70 |
| | | Severe overload | 70 |
| 1 | 0 | Light load | 80 |
| | | Optimal load | 80 |
| | | Moderate overload | 70 |
| | | Severe overload | 70 |
| | 1 | Light load | 80 |
| | | Optimal load | 80 |
| | | Moderate overload | 70 |
| | | Severe overload | 70 |

S304: the BMC collects statistics on the average load state of each logical device in each CXL device in the at least one CXL device.

Specifically, the BMC may send an access request to the calculation unit in each CXL device. After receiving the access request, the calculation unit in each CXL device reports the average load state of each logical device to the BMC. The BMC summarizes average load states of the logical devices that are reported by the CXL devices.

Table 10 is a summary table of the average load states of the logical devices in the MLDs. The average load state of LD0 of MLD_0 is Avr Light load, and the average load state of LD1 of MLD_0 is Avr Moderate overload. The average load state of LD0 of MLD_1 is Avr Light load, and the average load state of LD1 of MLD_1 is Avr Severe overload.

**Table 10**

| MLD number | LD number | Average load state |
|---|---|---|
| 0 | 0 | Average light load |
| | 1 | Average moderate overload |
| 1 | 0 | Average light load |
| | 1 | Average severe overload |

Table 11 is a summary table of an average load state of an SLD. An average load state of SLD_0 is Avr Light load.

**Table 11**

| Host number | SLD number | Average load state |
|---|---|---|
| 1 | 0 | Average light load |

S305: the BMC determines, based on the average load state of each logical device in each CXL device, target logical devices whose bandwidths need to be adjusted in each CXL device, and adjusts bandwidths of the target logical devices.

Specifically, when at least two LDs with different average load states exist in a CXL device, the BMC may determine that these LDs are the target logical devices whose bandwidths need to be adjusted, adjust a bandwidth of an LD with lower average load state severity downward, and adjust a bandwidth of an LD with higher average load state severity upward.

For example, as shown in FIG. 1, MLD_0 includes two logical devices LD0 and LD1. When the average load state of LD0 is Avr Light load, and the average load state of LD1 is Avr Severe overload, LD0 and LD1 of MLD_0 may be determined as target devices. The BMC adjusts a bandwidth of LD0 downward and adjusts a bandwidth of LD1 upward.

For example, MLD_0 includes three logical devices LD0, LD1, and LD2. When an average load state of LD0 is Avr Light load, an average load state of LD1 is Avr Moderate overload, and an average load state of LD2 is Avr Severe overload, LD0, LD1, and LD2 of MLD_0 may be determined as target devices. The BMC adjusts a bandwidth of LD0 downward and adjusts bandwidths of LD1 and LD2 upward.

Alternatively, for example, when an average load state of LD0 is Avr Light load and an average load state of LD1 is Avr Optimal load, the BMC may determine that LD0 and LD1 of MLD_0 are target devices. The BMC adjusts a bandwidth of LD0 downward and adjusts a bandwidth of LD1 upward, so that bandwidth utilization between the two LDs is more balanced.

It should be noted that when average load states of all LDs in a CXL device are the same, the BMC may not need to adjust bandwidths of the LDs in the CXL device. In addition, if an average load state of a specific LD in the MLD is Vary, it indicates that the average load state of the LD changes frequently, and the LD may be not adjusted.

In an embodiment, an LD whose average load state is Avr Light load or Avr Severe overload in the MLD may be first determined as a target logical device, and a bandwidth of the target logical device whose average load state is Avr Light load or Avr Severe overload is adjusted. Then, an LD whose average load state is Avr Optimal load or Avr Moderate overload in the MLD may be determined as a target logical device, and a bandwidth of the target logical device whose average load state is Avr Optimal load or Avr Moderate overload is adjusted. That is, the LD whose average load state is Avr Light load or Avr Severe overload is preferentially adjusted.

Further, if the average load state of the target logical device is Avr Light load or Avr Optimal load, the bandwidth of the target logical device may be adjusted downward. If the average load state of the target logical device is Avr Moderate overload or Avr Severe overload, the bandwidth of the target logical device may be adjusted upward. Therefore, a redundant bandwidth is allocated to the LD whose average load state is Avr Moderate overload or Avr Severe overload, so that bandwidth utilization of the MLD is increased.

For example, as shown in FIG. 1, LD1 of MLD_0, LD0 of MLD_1, and SLD_0 are mapped to Host1, LD0 of MLD_0 and LD1 of MLD_1 are mapped to Host2. That is, MLD_0 is accessed by both Host1 and Host2, and MLD_1 is also accessed by both Host1 and Host2. Still as shown in Table 8, because the average load state of LD0 of MLD_1 is Avr Light load, and the average load state of LD1 of MLD_1 is Avr Severe overload, LD0 and LD1 of MLD_1 may be determined as the target logical devices. The bandwidth of LD0 of MLD_1 is adjusted downward, and the bandwidth of LD1 of MLD_1 is adjusted upward.

In another embodiment, an LD whose average load state is Avr Light load in the MLD may be determined as a first target logical device, and a bandwidth of the first target logical device may be adjusted downward. Then, an LD whose average load state is Avr Moderate overload or Avr Severe overload in the MLD is determined as a second target logical device, and a bandwidth of the second target logical device is adjusted upward.

For example, as shown in FIG. 1, LD1 of MLD_0, LD0 of MLD_1, and SLD_0 are mapped to Host1, LD0 of MLD_0 and LD1 of MLD_1 are mapped to Host2. That is, MLD_0 is accessed by both Host1 and Host2, and MLD_1 is also accessed by both Host1 and Host2. Still as shown in Table 8, because the average load state of LD0 of MLD_0 is Avr Light load, LD0 of MLD_0 may be first determined as a first target device, and the bandwidth of LD0 of MLD_0 is adjusted downward. Because the average load state of LD1 of MLD_0 is Avr Moderate overload, LD1 of MLD_0 may be determined as a second target logical device, and the bandwidth of LD1 of MLD_0 is adjusted upward.

Optionally, the BMC may further determine, based on the mapping relationship between each logical device and the host, whether LDs accessed by different Hosts belong to a same MLD or whether LDs accessed by a same Host belong to different MLDs. If a specific MLD is simultaneously accessed by a plurality of hosts, one or more LDs whose bandwidths need to be adjusted in the MLD are preferentially determined and adjusted based on an average load state of each LD in the MLD.

Further, the bandwidths of the target logical devices may be adjusted in the following manner.

In an embodiment, the bandwidths of the target logical devices may be adjusted based on a preset adjustment amplitude.

In an embodiment, a preconfigured allocated bandwidth may be subtracted from a preconfigured limit bandwidth to calculate a maximum adjustment amplitude, and then the bandwidths of the target logical devices are adjusted based on the maximum adjustment amplitude. Further, the bandwidths of the target logical devices may be adjusted when the maximum adjustment amplitude is not exceeded.

For example, if a same MLD includes two LDs (LD1 and LD2), an average load state of LD1 is Avr Light load, an average load state of LD2 is Avr Severe overload, preconfigured limit bandwidths of both LD1 and LD2 are 60%, and preconfigured allocated bandwidths of both LD1 and LD2 are 40%, a maximum adjustment amplitude is calculated as 20% (60% - 40%). In this case, a bandwidth of LD1 may be adjusted downward based on the adjustment amplitude 20%, and a bandwidth of LD2 may be adjusted upward based on the adjustment amplitude 20%.

In an embodiment, adjustment amplitudes of the target logical devices may be determined based on average load states of the target logical devices, and then the bandwidths of the target logical devices are adjusted based on the determined adjustment amplitudes.

For example, if a same MLD includes three LDs (LD1, LD2, and LD3), an average load state of LD1 is Avr Light load, an average load state of LD2 is Avr Optimal load, and an average load state of LD3 is Avr Severe overload, it is determined to adjust bandwidths of LD1 and LD2 downward, and adjust a bandwidth of LD3 upward. However, because the average load state of LD1 is better than the average load state of LD2, it is determined that an adjustment amplitude of LD1 is greater than an adjustment amplitude of LD2. For example, the bandwidth of LD1 may be adjusted downward based on an adjustment amplitude 10%, the bandwidth of LD2 may be adjusted downward based on an adjustment amplitude 5%, and the bandwidth of LD3 may be adjusted upward based on an adjustment amplitude 15%.

It should be understood that if average load states of a plurality of LDs in a same MLD are all Avr Moderate overload or Avr Severe overload, bandwidths of the plurality of LDs may be adjusted upward based on a specific allocation ratio. If average load states of a plurality of LDs in a same MLD are all Avr Light load or Avr Optimal load, bandwidths of the plurality of LDs may be adjusted downward based on a specific allocation ratio. For example, a specific MLD includes four LDs, a maximum adjustment amplitude of a bandwidth of each LD is 20%, average load states of two of the LDs are Avr Severe overload, and average load states of the other two LDs are Avr Light load. Based on the adjustment amplitude 10%, bandwidths of two of the LDs may be adjusted upward, and bandwidths of the other two LDs may be adjusted downward.

Further, the bandwidth of the target logical device includes an allocated bandwidth and a limit bandwidth that are preconfigured, and the preconfigured allocated bandwidth or/and limit bandwidth of the target logical device may be separately adjusted.

For example, if an average load state of a first LD in the MLD is Avr Light load and an average load state of a second LD is Avr Severe overload, an allocated bandwidth and a limit bandwidth of the first LD may be adjusted downward, and an allocated bandwidth and a limit bandwidth of the second LD may be adjusted upward. Therefore, a redundant bandwidth of the first LD is adequately allocated to the second LD for use, to ensure that no redundant bandwidth exists in the first LD, and further ensure that the second LD obtains a sufficient bandwidth to process a service. If an average load state of a first LD in the MLD is Avr Light load and an average load state of a second LD is Avr Moderate overload, an allocated bandwidth of the first LD may be adjusted downward, and an allocated bandwidth of the second LD may be adjusted upward, so that the first LD and the second LD can obtain guaranteed bandwidths for processing services. If the average load state of the second LD is not improved after the allocated bandwidths of the first LD and the second LD are adjusted, limit bandwidths of the first LD and the second LD may be further adjusted to allocate a larger redundant bandwidth of the first LD to the second LD.

It should be noted that an allocated bandwidth and a limit bandwidth of a same LD may be separately adjusted based on different adjustment amplitudes or a same adjustment amplitude. Bandwidths of different LDs may be separately adjusted upward or downward based on different adjustment amplitudes or a same adjustment amplitude.

For example, as shown in Table 7, preconfigured allocated bandwidths of LD0 and LD1 of MLD_1 are 40%, and preconfigured limit bandwidths of LD0 and LD1 of MLD_1 are 60%. Because the average load state of LD0 of MLD_1 is Avr Light load, and the average load state of LD1 of MLD_1 is Avr Severe overload, it is determined to adjust the limit bandwidth and the allocated bandwidth of LD0 of MLD_1 downward, and adjust the limit bandwidth and the allocated bandwidth of LD1 of MLD_1 upward. Then, the preconfigured allocated bandwidth 40% is subtracted from the preconfigured limit bandwidth 60%, to calculate the maximum adjustment amplitude 20%.

Table 12 shows that the bandwidths of LD0 and LD1 of MLD_1 are re-adjusted based on the preconfigured bandwidths shown in Table 7. As shown in Table 12, the limit bandwidth of LD0 of MLD_1 is adjusted downward from 60% to 45% based on the adjustment amplitude 15% (no more than the maximum adjustment amplitude 20%), and the allocated bandwidth of LD0 of MLD_1 is adjusted downward from 40% to 30% based on the adjustment amplitude 10%. The limit bandwidth of LD0 of MLD_1 is adjusted upward from 60% to 75% based on the adjustment amplitude 15%; and the allocated bandwidth of LD0 of MLD_1 is adjusted downward from 40% to 60% based on the adjustment amplitude 20%. The bandwidths of LD0 and LD1 of MLD_0 are not adjusted.

**Table 12**

| MLD number | LD number | Initial allocated bandwidth | Initial limit bandwidth | Adjusted allocated bandwidth | Adjusted limit bandwidth |
|---|---|---|---|---|---|
| 0 | 0 | 40 | 60 | 40 | 60 |
| | 1 | 40 | 60 | 40 | 60 |
| 1 | 0 | 40 | 60 | **30** | **45** |
| | 1 | 40 | 60 | **60** | **75** |

It should be noted that after step 301 is completed, step 302 to step 305 may be performed a plurality of times, so that the BMC adjusts the bandwidth in a timely manner based on an actual operation state of the logical device in the CXL device. For example, step 302 to step 305 may be periodically performed.

It should be noted that a method for determining the target logical devices and adjusting the bandwidths of the target logical devices in another manner also falls within the protection scope of embodiments of this application.

In this embodiment of this application, the calculation unit is added to the CXL device, a proportion of the quantity of occurrence times of each of load states in the first time period is calculated by using the calculation unit to determine the average load state of each LD in the same CXL device, and bandwidths of different LDs in the same CXL device are adjusted based on the average load state. In this way, even when the plurality of LDs in the CXL device are accessed by different hosts, bandwidth utilization of the CXL device can also be increased by adjusting the bandwidths of the LDs in the CXL device.

In embodiments of this application, a CXL system may be divided into functional modules based on the foregoing method example. For example, functional modules may be obtained through division based on corresponding functions, or two or more functions may be integrated into one processing module. The foregoing integrated module may be implemented in a form of hardware, or may be implemented in a form of a software functional module. It should be noted that module division in embodiments of this application is an example, and is merely logical function division. In an actual implementation, there may be another division manner. The following performs description by using an example in which functional modules are obtained through division based on corresponding functions.

FIG. 4 is a schematic diagram of a bandwidth adjustment apparatus according to an embodiment of this application. The bandwidth adjustment apparatus may include a management module 401 and a calculation module 402.

The management module 401 is configured to: obtain an average load state of each logical device in the first CXL device; determine target logical devices in the first CXL device and an adjustment policy based on the average load state; and adjust bandwidths of the target logical devices according to the adjustment policy.

Optionally, the calculation module 402 is configured to: obtain the average load state of each logical device in the first CXL device; and send the average load state to the BMC.

Optionally, the calculation module 402 is further configured to: obtain a quantity of occurrence times of each of load states of each logical device in the first CXL device in a first time period, and obtain a total quantity of occurrence times of the load states in the first time period; and determine the average load state of each logical device in the first CXL device based on the quantity of occurrence times of each of load states of each logical device in the first CXL device and the total quantity.

Optionally, the management module 401 is further configured to send an access request to each CXL device in the at least one CXL device, where the access request is used to indicate to obtain the average load state of each logical device in each CXL device.

Optionally, the management module 401 is further configured to: when an average load state of the first logical device is different from an average load state of the second logical device, determine that the target logical devices are the first logical device and the second logical device.

Optionally, the management module 401 is further configured to: when severity of the average load state of the first logical device is greater than that of the average load state of the second logical device, adjust a bandwidth of the first logical device upward, and adjust a bandwidth of the second logical device downward; or when severity of the average load state of the first logical device is less than that of the average load state of the second logical device, adjust a bandwidth of the first logical device downward, and adjust a bandwidth of the second logical device upward.

Optionally, the management module 401 is further configured to configure a mapping relationship between a logical device in each CXL device in the at least one CXL device and a host, and configure a bandwidth of each logical device in each CXL device.

Optionally, the management module 401 is further configured to adjust the bandwidths of the target logical devices based on a preset adjustment amplitude.

Optionally, the management module 401 is further configured to: subtract a preconfigured allocated bandwidth from a preconfigured limit bandwidth, to calculate a maximum adjustment amplitude; and adjust the bandwidths of the target logical devices based on the maximum adjustment amplitude.

Optionally, the management module 401 is further configured to: determine adjustment amplitudes of the target logical devices based on average load states of the target logical devices; and adjust the bandwidths of the target logical devices based on the adjustment amplitudes.

It should be noted that the calculation module 402 is configured to perform the actions or the steps performed by the calculation unit in the CXL device in the foregoing method embodiment. The management module 401 is configured to perform the actions or the steps performed by the BMC in the foregoing method embodiment. For implementations of the modules, correspondingly refer to the corresponding descriptions in the method embodiment shown in FIG. 2 or FIG. 3, to perform the method and the functions performed by the calculation unit in the CXL device and the BMC in the foregoing embodiment.

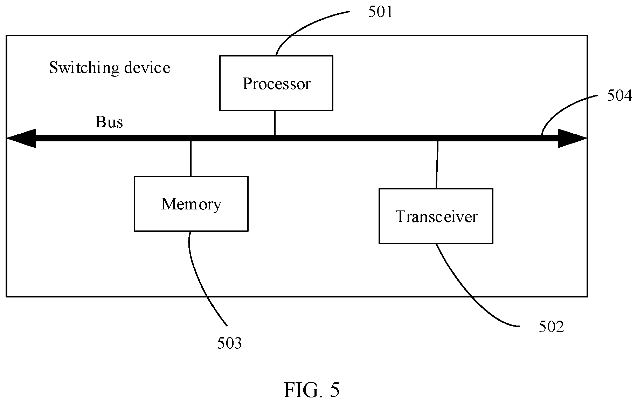

FIG. 5 is a schematic diagram of a structure of a switching device according to an embodiment of this application. The switching device may be applied to the CXL system shown in FIG. 1, to perform the functions of the CXL switch in the foregoing method embodiment, and implement the steps or the procedures performed by the BMC in the foregoing method embodiment.

As shown in FIG. 5, the switching device includes a processor 501 and a transceiver 502. Optionally, the switching device further includes a memory 503. The processor 501, the transceiver 502, and the memory 503 may communicate with each other through an internal connection path, to transmit a control and/or data signal. The memory 503 is configured to store a computer program. The processor 501 is configured to invoke the computer program from the memory 503 and run the computer program, to control the transceiver 502 to receive/send a signal. The processor 501 may correspond to the management module 401 in FIG. 4. The processor 501 and the memory 503 may be combined into a processing apparatus. The processor 501 is configured to execute program code stored in the memory 503 to implement the foregoing functions. In a specific implementation, the memory 503 may alternatively be integrated into the processor 501, or independent of the processor 501.

The transceiver 502 may also be referred to as a transceiver unit or a transceiver module. The transceiver 502 may include a receiver (or referred to as a receiving machine, a receiving circuit) and a transmitter (or referred to as a transmitting machine, a transmitting circuit). The receiver is configured to receive a signal, and the transmitter is configured to transmit a signal. The transceiver 502 is configured to communicate with a host or a CXL device.

It should be understood that the switching device shown in FIG. 5 can implement processes related to the CXL switch and the BMC in the method embodiment shown in FIG. 2 or FIG. 3. Operations and/or functions of the modules in the switching device are respectively used to implement corresponding procedures in the foregoing method embodiment. For details, refer to the descriptions in the foregoing method embodiment. To avoid repetition, detailed descriptions are appropriately omitted herein.

The processor 501 may be a central processing unit, a general-purpose processor, a digital signal processor, an application-specific integrated circuit, a field-programmable gate array or another programmable logical device, a transistor logical device, a hardware component, or any combination thereof. The processor 501 may implement or execute various example logical blocks, modules, and circuits described with reference to the content disclosed in embodiments of this application. The processor 501 may alternatively be a combination for implementing a computing function, for example, a combination of one or more microprocessors or a combination of a digital signal processor and a microprocessor. A communication bus 504 may be a peripheral component interconnect PCI bus, an enhanced industry standard architecture EISA bus, or the like. The bus may be classified into an address bus, a data bus, a control bus, and the like. For ease of representation, only one thick line is used in FIG. 5 to represent the bus, but it does not indicate that there is only one bus or one type of bus. The communication bus 504 is configured to implement connection and communication between these components. In this embodiment of this application, the transceiver 502 is configured to perform signaling or data communication with another node device. The memory 503 may include a volatile memory, for example, a non-volatile dynamic random access memory (nonvolatile random access memory, NVRAM), a phase change random access memory (phase change RAM, PRAM), and a magnetoresistive random access memory (magetoresistive RAM, MRAM), or may include a non-volatile memory, for example, at least one magnetic disk storage device, an electrically erasable programmable read-only memory (electrically erasable programmable read-only memory, EEPROM), a flash memory device, for example, an NOR flash memory (NOR flash memory) or an NAND flash memory (NAND flash memory), or a semiconductor device, for example, a solid state disk (solid state disk, SSD). Optionally, the memory 503 may be at least one storage apparatus located far away from the processor 501. Optionally, the memory 503 may further store a group of computer program code or configuration information. Optionally, the processor 501 may further execute a program stored in the memory 503. The processor may cooperate with the memory and the transceiver to perform any method and function of the CXL system in the foregoing embodiment of this application.

An embodiment of this application further provides another switching device. The switching device may be applied to the CXL system shown in FIG. 1, to perform the functions of the BMC in the foregoing method embodiment, and implement the steps or the procedures performed by the BMC in the foregoing method embodiment.

The switching device includes a processor and a transceiver. Optionally, the switching device further includes a memory. The processor, the transceiver, and the memory may communicate with each other through an internal connection path, to transmit a control and/or data signal. The memory is configured to store a computer program. The processor is configured to invoke the computer program from the memory and run the computer program, to control the transceiver to receive/send a signal. The processor may correspond to the management module 401 in FIG. 4. The transceiver is configured to communicate with the CXL switch. The processor and the memory may be combined into a processing apparatus. The processor is configured to execute program code stored in the memory to implement the foregoing functions. In a specific implementation, the memory may alternatively be integrated into the processor, or independent of the processor.

It should be understood that the switching device can implement the processes related to the BMC in the method embodiment shown in FIG. 2 or FIG. 3. Operations and/or functions of the modules in the switching device are respectively used to implement corresponding procedures in the foregoing method embodiment. For details, refer to the descriptions in the foregoing method embodiment. To avoid repetition, detailed descriptions are appropriately omitted herein.

An embodiment of this application further provides a server. The server includes components such as a processor, a CXL switch module, at least one CXL module, and a board management controller (Board Management Controller, BMC). The CXL module is integrated on the server, and may include a cache and an accessible memory. The CXL switch module may be a chip that is integrated on the server and that has the functions of the CXL switch in the CXL system in FIG. 1, and the CXL switch module is separately connected to the processor, the CXL module, and the BMC. The processor may create a virtual device that has storage and statistics collection functions, and is configured to separately connect to different CXL modules to complete different services.

It should be noted that the BMC may alternatively be disposed on the CXL switch module. The host in the CXL system in FIG. 1.

An embodiment of this application further provides a chip system. The chip system includes a processor, used by a CXL system to implement the functions in any of the foregoing embodiments, for example, determine the average load state in the foregoing method. In a possible design, the chip system may further include a memory, and the memory is configured for program instructions and data necessary for the CXL system. The chip system may include a chip, or may include a chip and another discrete device. Input and output of the chip system respectively correspond to receiving and sending operations of the CXL system in the method embodiment.

According to the method provided in embodiments of this application, an embodiment of this application further provides a computer program product. The computer program product includes a computer program. When the computer program runs on a computer, the computer is enabled to perform the method in any embodiment shown in FIG. 2 or FIG. 3.

According to the method provided in embodiments of this application, an embodiment of this application further provides a computer-readable medium. The computer-readable medium stores a computer program. When the computer program runs on a computer, the computer is enabled to perform the method in any embodiment shown in FIG. 2 or FIG. 3.

The foregoing embodiments may be completely or partially implemented by using software, hardware, firmware, or any combination thereof. When software is used for implementation, the foregoing embodiments may be completely or partially implemented in a form of a computer program product. The computer program product includes one or more computer instructions. When the computer instructions are loaded and executed on a computer, the procedures or functions described in embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (digital subscriber line, DSL)) or wireless (for example, infrared, wireless, or microwave) manner. The computer-readable storage medium may be any available medium accessible by the computer or a data storage device that includes one or more available media, for example, a server or a data center. The available medium may be a magnetic medium (for example, a floppy disk, a hard disk, or a magnetic tape), an optical medium (for example, a digital video disc (digital video disc, DVD)), a semiconductor medium (for example, a solid state disc (solid state disc, SSD)), or the like.

The foregoing descriptions are merely specific implementations of this application, but are not intended to limit the protection scope of embodiments of this application. Any change or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

## Claims

1. A bandwidth adjustment method, wherein the method is applied to a compute express link CXL system, the CXL system comprises at least one CXL device and a board management controller BMC, the at least one CXL device comprises a first CXL device, the first CXL device comprises at least two logical devices, and the method comprises:
obtaining, by the BMC, an average load state of each logical device in the first CXL device;
determining, by the BMC, target logical devices in the first CXL device and an adjustment policy based on the average load state; and
adjusting, by the BMC, bandwidths of the target logical devices according to the adjustment policy.

2. The method according to claim 1, wherein the obtaining, by the BMC, an average load state of each logical device in the first CXL device comprises:
obtaining, by the first CXL device, the average load state of each logical device in the first CXL device; and
sending, by the first CXL device, the average load state to the BMC.

3. The method according to claim 2, wherein the obtaining, by the first CXL device, the average load state of each logical device in the first CXL device comprises:
obtaining, by the first CXL device, a quantity of occurrence times of each of load states of each logical device in the first CXL device in a first time period, and obtaining a total quantity of occurrence times of the load states in the first time period; and
determining, by the first CXL device, the average load state of each logical device in the first CXL device based on the quantity of occurrence times of each of load states of each logical device in the first CXL device and the total quantity.

4. The method according to any one of claims 1 to 3, wherein the average load state comprises an average light load, an average optimal load, an average moderate overload, and an average severe overload, and the first CXL device comprises a first logical device and a second logical device; and the determining, by the BMC, target logical devices in the first CXL device and an adjustment policy based on the average load state comprises:
when an average load state of the first logical device is different from an average load state of the second logical device, determining, by the BMC, that the target logical devices are the first logical device and the second logical device.

5. The method according to claim 4, wherein the determining, by the BMC, target logical devices in the first CXL device and an adjustment policy based on the average load state comprises:
when severity of the average load state of the first logical device is greater than that of the average load state of the second logical device, adjusting, by the BMC, a bandwidth of the first logical device upward, and adjusting, by the BMC, a bandwidth of the second logical device downward; or
when severity of the average load state of the first logical device is less than that of the average load state of the second logical device, adjusting, by the BMC, a bandwidth of the first logical device downward, and adjusting, by the BMC, a bandwidth of the second logical device upward.

6. The method according to any one of claims 1 to 5, wherein the adjusting, by the BMC, bandwidths of the target logical devices according to the adjustment policy comprises:
adjusting, by the BMC, the bandwidths of the target logical devices based on a preset adjustment amplitude.

7. The method according to any one of claims 1 to 5, wherein the adjusting, by the BMC, bandwidths of the target logical devices according to the adjustment policy comprises:
subtracting, by the BMC, a preconfigured allocated bandwidth from a preconfigured limit bandwidth, to calculate a maximum adjustment amplitude; and
adjusting, by the BMC, the bandwidths of the target logical devices based on the maximum adjustment amplitude.

8. The method according to any one of claims 1 to 5, wherein the adjusting, by the BMC, bandwidths of the target logical devices according to the adjustment policy comprises:
determining, by the BMC, adjustment amplitudes of the target logical devices based on average load states of the target logical devices; and
adjusting, by the BMC, the bandwidths of the target logical devices based on the adjustment amplitudes.

9. A compute express link CXL system, wherein the CXL system comprises at least one CXL device and a board management controller BMC, the at least one CXL device comprises a first CXL device, and the first CXL device comprises at least two logical devices; and
the BMC is configured to: obtain an average load state of each logical device in the first CXL device; determine target logical devices in the first CXL device and an adjustment policy based on the average load state; and adjust bandwidths of the target logical devices according to the adjustment policy.

10. The system according to claim 9, wherein
the first CXL device is configured to: obtain the average load state of each logical device in the first CXL device; and send the average load state to the BMC.

11. The system according to claim 10, wherein
the first CXL device is further configured to: obtain a quantity of occurrence times of each of load states of each logical device in the first CXL device in a first time period, and obtain a total quantity of occurrence times of the load states in the first time period; and determine the average load state of each logical device in the first CXL device based on the quantity of occurrence times of each of load states of each logical device in the first CXL device and the total quantity.

12. The system according to any one of claims 9 to 11, wherein the average load state comprises an average light load, an average optimal load, an average moderate overload, and an average severe overload, and the first CXL device comprises a first logical device and a second logical device; and
the BMC is further configured to: when an average load state of the first logical device is different from an average load state of the second logical device, determine that the target logical devices are the first logical device and the second logical device.

13. The system according to claim 12, wherein
the BMC is further configured to: when severity of the average load state of the first logical device is greater than that of the average load state of the second logical device, adjust a bandwidth of the first logical device upward, and adjust a bandwidth of the second logical device downward; or
the BMC is further configured to: when severity of the average load state of the first logical device is less than that of the average load state of the second logical device, adjust a bandwidth of the first logical device downward, and adjust a bandwidth of the second logical device upward.

14. The system according to any one of claims 9 to 13, wherein
the BMC is further configured to adjust the bandwidths of the target logical devices based on a preset adjustment amplitude.

15. The system according to any one of claims 9 to 13, wherein
the BMC is further configured to: subtract a preconfigured allocated bandwidth from a preconfigured limit bandwidth, to calculate a maximum adjustment amplitude; and adjust the bandwidths of the target logical devices based on the maximum adjustment amplitude.

16. The system according to any one of claims 9 to 13, wherein
the BMC is further configured to: determine adjustment amplitudes of the target logical devices based on average load states of the target logical devices; and adjust the bandwidths of the target logical devices based on the adjustment amplitudes.
